# EUROPÄISCHE PATENTANMELDUNG

(11) **EP 0 863 574 A2**
(43) Veröffentlichungstag der Anmeldung: **09.09.1998**
(21) Anmeldenummer: 98102653.7
(22) Anmeldetag: 17.02.1998
(51) Int. Cl.: H01R 4/64, H01R 9/26

(54) **Verfahren zur Potentialführung von geschirmten Kabeln in Verteilereinrichtungen der Telekommunikations- und Datentechnik**

(30) Priorität: 08.03.1997 DE 19711102
(71) Anmelder: KRONE Aktiengesellschaft, 14167 Berlin (DE)
(72) Erfinder: Grugel, Peter, Dipl.-Ing., 12207 Berlin (DE)

(57) **Zusammenfassung**

Die Erfindung bezieht sich auf ein Verfahren zur Potentialführung von geschirmten Kabeln in Verteilereinrichtungen der Telekommunikations- und Datentechnik, bestehend aus Verteilerleisten in Montagebügeln, die mit einem Gestell verbunden sind.

Die Aufgabe der Erfindung, ein gattungsgemäßes Verfahren zu entwickeln, mit dem die Potentialführung von geschirmten Kabeln mit einfachen Mitteln sehr variabel entsprechend den jeweiligen Anwendungen gewährleistet wird, wird dadurch gelöst, daß Potentiale der verwendeten geschirmten Kabel 7,8 zusammengeführt und über mindestens eine Sammelschiene 5 wahlweise getrennt vom Gestellpotential oder zusammen mit dem Gestellpotential weitergeführt werden.

## Beschreibung

Die Erfindung bezieht sich auf ein Verfahren zur Potentialführung von geschirmten Kabeln in Verteilereinrichtungen der Telekommunikations- und Datentechnik gemäß dem Oberbegriff des Anspruchs 1.

Zur Aufnahme von Verteilerleisten sind in der Verteilereinrichtung Montagebügel bekannt, die in Verteilergestellen eingebracht sind.

Zum Aufbau eines Hauptverteilers in Telekommunikations- und Datennetzen werden Verteilerleisten in senkrechten Blöcken in Montagebügeln, die in Gestelle eingebracht sind, übereinander angeordnet.

Aus der DE 43 03 976 C1 ist es bekannt, die Potentiale der Schirmung von ankommenden und von wegführenden Kabeln über Kabelhalter von der Verteilerleiste zum Gestell und damit auf Masse zu führen. Es wird eine feste leitende Verbindung zwischen dem Schirmgeflecht der Kabel und dem Kabelhalter und dem Gestell beschrieben, wobei auch die Schirmbleche der Verteilerleisten und die Schirmung von Steckern einbezogen sind. Die beschriebene durchgehende Potentialführung des Schirmsystems ist auf den Anwendungsfall beschränkt, die einzelnen zusammengehörenden Kabelpaare getrennt und unabhängig voneinander auf Masse zu legen.

Der Erfindung liegt die Aufgabe zugrunde, ein gattungsgemäßes Verfahren zu entwickeln, mit dem die Potentialführung von geschirmten Kabeln mit einfachen Mitteln sehr variabel entsprechend den jeweiligen Anwendungen gewährleistet wird.

Die Lösung dieser Aufgabe ergibt sich aus den Merkmalen des Anspruches 1. Die Potentiale der geschirmten Kabel können wahlweise getrennt von dem Gestellpotential oder zusammen mit dem Gestellpotential geführt werden, wobei alle Varianten ohne große Umrüstungen realisiert werden können.

Wenn die Potentiale getrennt geführt werden sollen, dann gibt es die folgenden Möglichkeiten:
1. Es werden alle Kabel einer Gestelleinheit zusammengeführt.
2. Es werden alle Kabel einer Gestelleinheit mit allen Kabeln jeder beliebigen anderen Gestelleinheit (auch gestellreihenübergreifend) zusammengeführt.
3. Es werden alle Kabel aller Gestelleinheiten (auch gestellreihenübergreifend) zusammengeführt.
4. Es werden bestimmte ausgewählte Kabel einer Gestelleinheit zusammengeführt.
5. Es werden bestimmte Kabel einer Gestelleinheit mit allen oder mit bestimmten Kabeln jeder beliebigen anderen Gestelleinheit (auch gestellreihenübergreifend) zusammengeführt.
6. Es werden bestimmte Kabel aller Gestelleinheiten (auch gestellreihenübergreifend) zusammengeführt.

Wenn die Potentiale der Gestelleinheit und der Kabel zusammen weitergeführt werden, dann gibt es dazu folgende Möglichkeiten:
1. Es werden alle Kabel einer Gestelleinheit zusammengeführt.
2. Es werden bestimmte Kabel einer Gestelleinheit zusammengeführt.
3. Es werden alle Kabel aller Gestelleinheiten einer Gestellreihe zusammengeführt.
4. Es werden bestimmte Kabel aller Gestelleinheiten einer Gestellreihe zusammengeführt.

Diese aufgeführten Varianten der Weiterführung der Potentiale wird durch die Verwendung der erfindungsge-mäßen Kabelschelle und dem erfindungsgemäßen Halter in Verbindung mit einer Sammelschiene ermöglicht.

Weitere vorteilhafte Ausgestaltungen der Erfindung ergeben sich aus den Unteransprüchen.

Die Erfindung ist nachfolgend anhand eines in den Zeichnungen dargestellten Ausführungsbeispieles einer Kabelschelle und eines Halters naher erläutert. Es zeigen:
- Fig. 1: eine Seitenansicht einer Gestelleinheit mit Montagebügeln,
- Fig. 2: die Draufsicht auf die Gestelleinheit gemäß Fig. 1,
- Fig. 3: die Draufsicht auf einen Halter mit montierten Kabelschellen,
- Fig. 4: eine Ansicht auf die Kabelschelle und
- Fig. 5: eine um 180° gedrehte Ansicht der Kabelschelle nach Fig. 4.

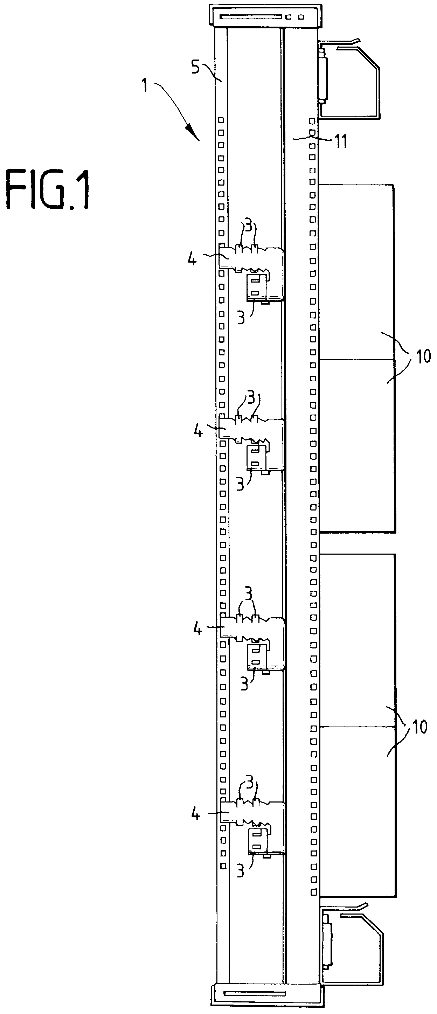

In der Fig. 1 ist eine Gestelleinheit 1 in Seitenansicht dargestellt, die im wesentlichen aus einem Träger 11, einer Sammelschiene 5, aus mehreren Montagebügeln 10, und aus mehreren Haltern 4 mit Kabelschellen 3 gebildet ist.

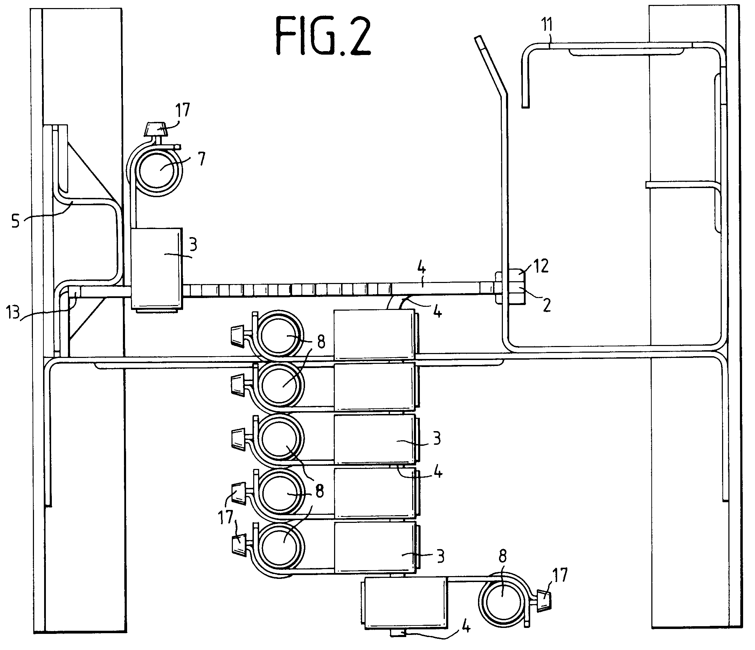

Aus der Draufsicht auf die Gestelleinheit 1 gemäß der Fig. 2 ist ersichtlich, daß die Potentiale der Kabelschirme der Systemkabel 8 und der Netzkabel 7 über elektrisch leitende Kabelschellen 3 und über den elektrisch leitend mit den Kabelschellen 3 verbundenen elektrisch leitenden Halter 4 auf die Sammelschiene 5 zusammengeführt werden. Die Sammelschiene 5 ist zur Gestelleinheit 1 elektrisch isoliert angeordnet. Der Halter 4 ist mit seinem einen Ende 2 gestellseitig in eine Aufnahme 12 aufgerastet. Die aus elektrisch isolierendem Material gefertigte Aufnahme 12 mit dem aufgerasteten Halter 4 wird nach der Gestellmontage in den Träger 11 eingeschwenkt und mit diesem mechanisch fest verbunden. Danach wird der Halter 4 mit seinem Ende 13 auf der gegenüberliegenden Seite mit der Sammelschiene 5 verbunden, zum Beispiel verschraubt, so daß die Gestelleinheit 1 durch den Halter 4 zusätzlich versteift wird. Die beim Anschalten der nicht dargestellten Verteilerleisten-Module in den Montagebügeln 10 auftretenden Torsionskräfte werden über diese Verbindung weitestgehend kompensiert. Zu jedem Montagebügel 10 wird mittig ein Halter 4 eingebracht.

Die Aufnahme 12 stellt zur Gestellseite (Träger 11) die elektrische Trennstelle dar. Im vorliegenden Ausführungsbeispiel werden die Kabelschirmpotentiale von den Gestellpotentialen getrennt zusammengeführt.

Die gewünschte Verbindung der Sammelschiene 5 und/oder die Anbindung an das Gestellpotential erfolgt über einen oder mehrere nichtdargestellte elektrische Leiter.

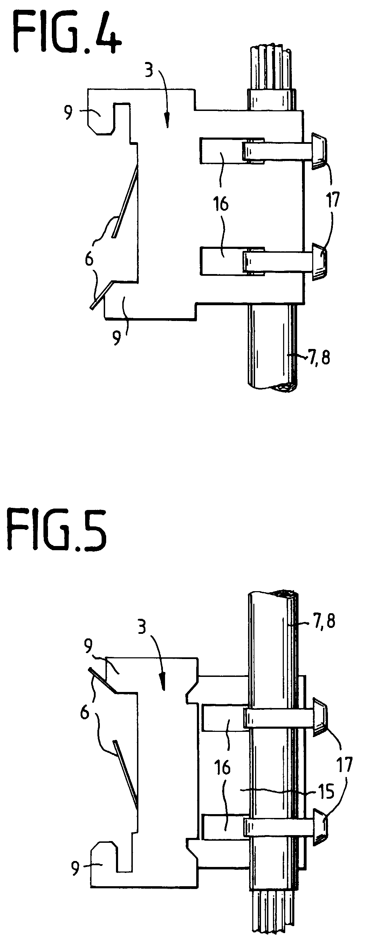

Die Fig. 4,5 zeigen die Kabelschelle 3 in zwei Ansichten. In der Fig. 5 ist die Kabelschelle 3 mit dem aufgelegten und gebundenen Kabel 7,8 und in der Fig. 4 ist die Unterseite der Darstellung nach der Fig. 5 gezeigt. Die Kabelschelle 3 besteht aus einer Rastvorrichtung 9 zum Aufrasten auf den Kalter 4 und somit zur Herstellung der elektrischen Verbindung zwischen der Kabelschelle 3 und dem Kalter 4, aus einer Aufnahme 15 mit Öffnungen 16 für das oder die Kabel 7,8. Durch die Öffnungen 16 werden Kabelbinder 17 zum Binden der Kabel 7,8 durchgezogen. Die Kabelschelle 3 enthält eine Feder 6, über die ein sicheres Aufrasten auf den Kalter 4 gewährleistet wird. Das Aufrasten und bei Bedarf das Lösen der Kabelschelle 3 vom Kalter 4 erfolgt werkzeuglos. Das Auflegen und Anbinden der Kabel 7,8 in der Kabelschelle 3 erfolgt außerhalb der Gestelleinheit 1. Grundsätzlich ist es auch möglich, die nichtdargestellten Verteilerleisten-Module außerhalb der Gestelleinheit 1 zu beschalten, um sie nach dem Plazieren der Kabel 7 über die Kabelschelle 3 auf dem Halter 4, bequem in den Montagebügel 10 stecken zu können.

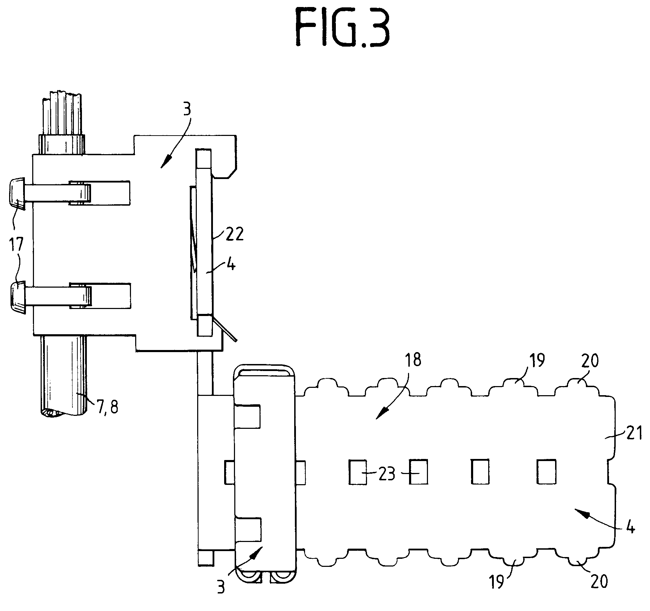

In der Fig. 3 ist der Kalter 4 mit zwei aufgerasteten Kabelschellen 3 gezeigt.

Der Kalter 4 wird aus einem T-ähnlichen Körper 18 mit einer Außenkontur 19 auf den Schmalseiten des Körpers 18, auf der Rastvorsprünge 20 ausgeformt sind, gebildet. Über die besondere Außenkontur 19 des Halters 4 kann die in die Kabelschelle 3 eingesetzte Feder 6 mechanisch fest einrasten und elektrisch leitend stabil plaziert werden. Die Kabelschelle 3 kann in vier verschiedenen Richtungen auf den Halter 4 aufgerastet werden. Es können mehrere Kabelschellen 3 nebeneinander aufgerastet werden. Die T-ähnliche Form des Halters ermöglicht es, die Netz- und Systemkabel 7,8 in der Gestelleinheit 1 getrennt zu führen.

In den Schenkeln 21,22 des T-ähnlichen Körpers 18 des Halters 4 sind Öffnungen 23 vorgesehen, über die im Bedarfsfall Kabel 7,8 ohne Kabelschellen 3 direkt mittels Kabelbinder 17 befestigt werden können.

### BEZUGSZEICHENLISTE

- 01: Gestelleinheit
- 02: Halterende
- 03: Kabelschelle
- 04: Halter
- 05: Sammelschiene
- 06: Feder
- 07: Netzkabel
- 08: Systemkabel
- 09: Rastvorrichtung
- 10: Montagebügel
- 11: Träger
- 12: Aufnahme
- 13: Halterende
- 14:
- 15: Aufnahme
- 16: Öffnung
- 17: Kabelbinder
- 18: Körper
- 19: Außenkontur
- 20: Rastvorsprung
- 21: Schenkel
- 22: Schenkel
- 23: Öffnung

## Patentansprüche

1. Verfahren zur Potentialführung von geschirmten Kabeln in Verteilereinrichtungen der Telekommunikations- und Datentechnik, bestehend aus Verteilerleisten in Montagebügeln, die mit einem Gestell verbunden sind,
**dadurch gekennzeichnet,** daß
Potentiale der verwendeten geschirmten Kabel (7,8) zusammengeführt und über mindestens eine Sammelschiene (5) wahlweise getrennt vom Gestellpotential oder zusammen mit dem Gestellpotential weitergeführt werden.

2. Verfahren nach Anspruch 1, dadurch gekennzeichnet, daß Potentiale der geschirmten Kabel (7,8) von den Kabelschirmen jeweils auf eine Kabelschelle (3) und von dort über einen einseitig isolierten Halter (4) auf eine zur Gestelleinheit (1) isolierte Sammelschiene (5) getrennt vom Gestellpotential weitergeführt werden.

3. Verfahren nach Anspruch 2, dadurch gekennzeichnet, daß die Potentiale der Netz- und der Systemkabel (7,8) zusammengeführt werden.

4. Verfahren nach Anspruch 1 und 2, dadurch gekennzeichnet, daß die Sammelschiene (5) und die Gestelleinheit (1) über elektrische Leiter verbunden werden und die Kabelschirmpotentiale zusammen mit dem Gestellpotential weitergeführt werden.

5. Verfahren nach Anspruch 2, dadurch gekennzeichnet, daß die aus einer Rastvorrichtung (9) und aus einem Aufnahmekörper (15) zur Halterung unterschiedlicher Kabeldurchmesser bestehende Kabelschelle (3) federnd auf den Kalter (4) aufgerastet wird.

6. Verfahren nach Anspruch 5, dadurch gekennzeichnet, daß die Kabelschelle (3) werkzeuglos auf den Kalter (4) aufgerastet und vom Kalter (4) gelöst werden kann.

7. Verfahren nach Anspruch 2, dadurch gekennzeichnet, daß auf den T-ähnlich ausgeführten und auf seiner Außenkontur (19) Rastvorsprünge (20) aufweisenden Halter (4) gestellseitig eine Aufnahme (12) zur Herstellung einer elektrischen Trennstelle aufgerastet wird.

8. Verfahren nach den Ansprüchen 1 bis 7, dadurch gekennzeichnet, daß in Schenkeln (21,22) des Halters (4) Öffnungen (23) zur direkten Befestigung von Kabeln (7,8) vorgesehen sind.
